Europäisches Patentamt
European Patent Office
Office européen des brevets

(19)

(11) Numéro de publication: **0 338 918**
**A1**

(12) **DEMANDE DE BREVET EUROPEEN**

(21) Numéro de dépôt: **89401078.4**

(22) Date de dépôt: **19.04.89**

(51) Int. Cl.[4]: **C 07 F 9/24**
C 08 F 2/38

(30) Priorité: **19.04.88 FR 8805178**

(43) Date de publication de la demande:
**25.10.89 Bulletin 89/43**

(84) Etats contractants désignés:
**AT BE CH DE ES FR GB GR IT LI LU NL SE**

(71) Demandeur: **Société Anonyme dite: NORSOLOR**
**Tour Aurore, Place des Reflets**
**F-92080 Paris la Défense 2, Cedex 5 (FR)**

(72) Inventeur: **Clouet, Gilbert**
**6, rue des Jardins**
**F-67610 La Wantzenau (FR)**

**Nair, Reghunadhan C.P. Polymers and Special**
**Chemicals Division Vikram Sarabhai Space Center**
**Trivandrum 695022 (IN)**

(74) Mandataire: **Chaillot, Geneviève**
**Cabinet CHAILLOT 21, avenue Louise de Bettignies**
**F-92700 Colombes (FR)**

(54) **Nouveaux disulfures de thiurame à groupements phosphorés, leur préparation et leur utilisation dans la fabrication de polymères vinyliques ignifugeants.**

(57) Ce composé (I) est préparé par réaction d'un composé (II) avec le disulfure de carbone, en présence d'un agent oxydant. Il est utile comme agent ayant la triple fonction d'initiateur, d'agent de transfert de chaîne et d'agent de terminaison dans la polymérisation radicalaire de monomères vinyliques. Les oligomères et polymères vinyliques α,ω-bifonctionnels ainsi obtenus sont des polymères ignifugeants ou pouvant être utilisés comme additifs dans la préparation de polymères ignifugeants. Ils peuvent aussi être utilisés pour fabriquer des polymères séquencés, par condensation de leurs fonctions terminales en présence d'au moins un autre oligomère ou polymère fonctionnel, ces polymères séquencés étant aussi des polymères ignifugeants.

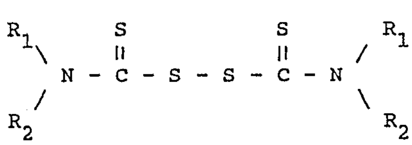 (I) 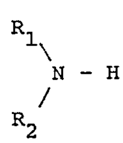 (II)

$R_1$, $R_2$ = notamment alkyle en $C_1$-$C_{12}$, éventuellement interrompu par au moins un hétéroatome et/ou par au moins un 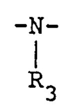 ;

cycloalkyle; aryle; -Y-$R_4$ (Y = simple liaison, hétéroatome; alkyle en $C_1$-$C_{12}$ ; cycloalkyle en $C_3$-$C_{12}$ ; aryle) ; $R_4$ = groupement phosphoré ; au moins l'un parmi $R_1$ et $R_2$ étant constitué par ou porteur d'au moins un groupement phosphoré.

EP 0 338 918 A1

**Description**

## NOUVEAUX DISULFURES DE THIURAME A GROUPEMENTS PHOSPHORES, LEUR PREPARATION ET LEUR UTILISATION DANS LA FABRICATION DE POLYMERES VINYLIQUES IGNIFUGEANTS

La présente invention porte sur de nouveaux disulfures de thiurame à groupements phosphorés, sur un procédé de fabrication de ces disulfures et sur leur utilisation dans la polymérisation radicalaire de monomères vinyliques conduisant à des oligomères et polymères vinyliques $\alpha,\omega$-bifonctionnels.

L'invention porte également sur ces oligomères et polymères vinyliques $\alpha,\omega$-bifonctionnels qui, comportant les groupements phosphate ou phosphonate ou autres groupements phosphorés issus de ces disulfures de thiurame, sont utiles en tant que polymères ignifugeants. Par ailleurs, ces oligomères et polymères vinyliques sont également utiles comme additifs dans la fabrication de polymères ignifugeants, et ils sont également utiles pour fabriquer des copolymères séquencés par condensation de leurs fonctions terminales avec au moins un autre oligomère ou polymère fonctionnel, ces copolymères séquencés constituant également des polymères ignifugeants.

Les polymères vinyliques fonctionnels, recherchés parce qu'ils peuvent entrer dans la composition de polymères à propriétés spécifiques, par exemple à propriétés d'ignifugation dans le cas de l'invention, étaient jusqu'ici généralement préparés par la voie anionique, mettant en jeu la réaction d'anions actifs avec des électrophiles appropriés. Toutefois, ce type de polymérisation est difficile à mettre en oeuvre à l'échelle industrielle. C'est pourquoi, depuis ces dernières années, on a proposé des techniques de polymérisation radicalaire, employant des agents producteurs de radicaux libres, monofonctionnels et, dans certains cas, difonctionnels, comme les systèmes azoïques et les systèmes Redox. Cependant, dans ces systèmes, les fonctions sont limitées aux fonctions hydroxyle et carboxyle.

Des disulfures non fonctionnels de tétraalkylthiurame ont déjà été décrits par Takayuki Otsu et al dans ≪Makromol. Chem. Rapid., Commun. 3, 127-132 (1982)≫, à titre d'agents ayant la triple fonction d'initiateur, d'agent de tranfert de chaîne et d'agent de terminaison, dans la polymérisation radicalaire de monomères vinyliques, de tels agents étant désignés dans cet article par l'abréviation ≪inifertér≫. Des disulfures de thiurame fonctionnels sont proposés dans la demande de brevet européen EP-A-0237792 à titre d'iniferters. Les groupements fonctionnels envisagés ne comprennent pas les groupements phosphorés (fonctions P).

La Société déposante a maintenant découvert que si l'on utilisait des iniferters à groupements phosphorés, on pouvait obtenir des polymères à extrémités portant des fonctions P, qui présentent une tenue au feu supérieure à celle de polymères porteurs de fonctions P le long de la chaîne.

La présente invention a donc d'abord pour objet un composé chimique représenté par la formule (I) :

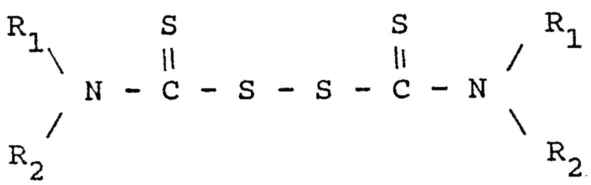

(I)

dans laquelle :

- $R_1$ et $R_2$ représentent chacun, indépendamment l'un de l'autre :

. un groupe alkyle en $C_1$-$C_{12}$, en particulier en $C_1$-$C_6$, linéaire ou ramifié, éventuellement interrompu par au moins un hétéroatome tel que O et/ou par au moins un reste

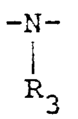 ;

. un groupe cycloalkyle en $C_3$-$C_{12}$, en particulier en $C_5$-$C_7$ ;

. un groupe aryle, par exemple un groupe phényle ou naphtyle ;

. un groupe -Y-$R_4$, dans lequel :

- Y représente une simple liaison, un hétéroatome tel que O ; un groupe alkyle en $C_1$-$C_{12}$, linéaire ou ramifié, éventuellement interrompu par un hétéroatome tel que O et/ou par au moins un reste

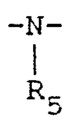 ;

un groupe cycloalkyle en $C_3$-$C_{12}$ ; un groupe aryle ; et

- $R_4$ représente un groupement phosphoré ;

- $R_3$ et $R_5$ étant choisis indépendamment parmi les groupes entrant dans la définition de $R_1$ et $R_2$, à l'exclusion du groupe Y-$R_4$ ;

- chacun des radicaux $R_1$, $R_2$, $R_3$ et $R_5$ pouvant porter au moins un groupement phosphoré ;
à la condition qu'au moins l'un parmi les radicaux $R_1$ et $R_2$ soit constitué par ou soit porteur d'au moins un groupement phosphoré, ce groupement pouvant être porté par un radical $R_3$ ou $R_5$.

On peut mentionner en particulier :

. les composés de formule (I) dans laquelle $R_1$ et $R_2$ représentent chacun un groupe alkyle en $C_1$-$C_6$, au moins l'un parmi ces deux groupes portant un groupement phosphoré ;

. les composés de formule (I) dans laquelle $R_1$ (ou $R_2$) représente le groupement comportant la fonction phosphinoyle ou thiophosphinoyle :

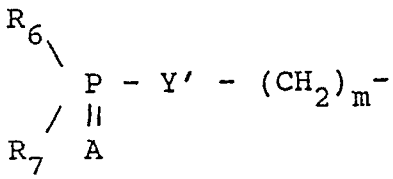

dans lequel :

- $R_6$ et $R_7$, identiques ou différents, représentent chacun un groupe alkyle, alcoxy, aryle, aryloxy,

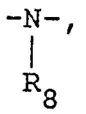

$R_8$ étant choisi parmi les groupes entrant dans la définition de $R_1$ et $R_2$, les groupes $R_6$, $R_7$ et $R_8$ pouvant être substitués chacun par au moins un atome d'halogène ;

- A représente un atome d'oxygène ou de soufre ;
- Y′ représente une simple liaison, ou -O-, ou encore

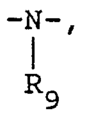

$R_9$ étant choisi parmi les groupes entrant dans la définition de $R_1$ et $R_2$ ; et

- m va de 0 à 12, en particulier de 2 à 6.

Les composés de formule (I) qui viennent d'être définis peuvent être préparés par réaction d'un composé de formule (II) :

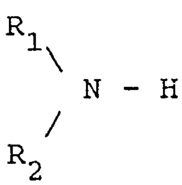
(II)

avec le disulfure de carbone, en présence d'au moins un agent oxydant, qui est choisi, par exemple, parmi l'iode, l'eau oxygénée, les hypochlorites de métaux alcalins et les hydroperoxydes d'alkyle et d'aryle.

Conformément à un premier mode de réalisation, on utilise un rapport molaire du composé (II) à $CS_2$ qui est sensiblement de 2 : 1, suivant le schéma réactionnel supposé suivant :

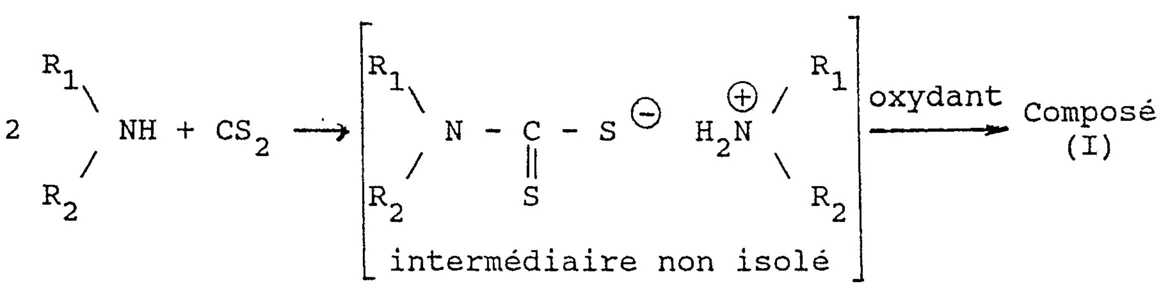


Conformément à un second mode de réalisation, on utilise un rapport molaire du composé (II) à $CS_2$ qui est sensiblement de 1 : 1, la réaction étant effectuée en présence d'une amine tertiaire (par exemple, la pyridine ou la triéthylamine), utilisée à raison d'environ 1 mole par mole du composé (II) ou de $CS_2$. Dans ce cas, le schéma réactionnel supposé est le suivant :

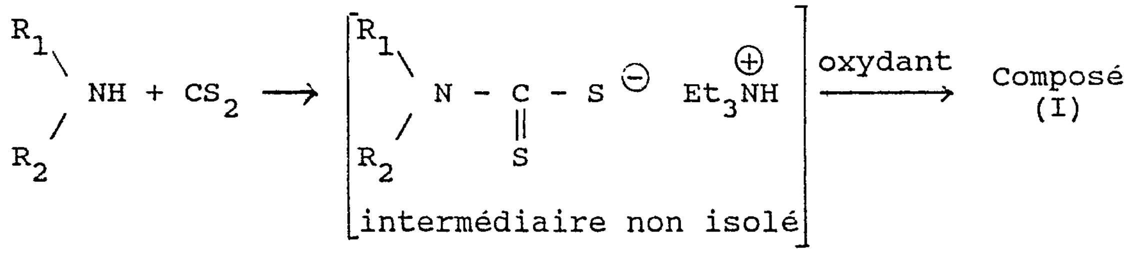


(l'amine tertiaire étant $Et_3NH$)

La réaction est exothermique et on en contrôle l'exothermicité par tout moyen connu. Par ailleurs, elle est effectuée en milieu solvant, $CS_2$ pouvant, quant à lui, faire office de solvant.

La présente invention a également pour objet l'utilisation du composé de formule (I), comme agent iniferter dans la polymérisation radicalaire de monomères vinyliques, ledit agent iniferter étant introduit en début de polymérisation avec le mélange des monomères.

Comme monomères vinyliques, on peut citer les méthacrylates et acrylates d'alkyle, dont le groupe alkyle comporte, par exemple, de 1 à 8 atomes de carbone, les hydrocarbures vinylaromatiques, les nitriles insaturés, les acrylates d'alcoxy inférieurs, l'acrylate de cyanéthyle, l'acrylamide, les acrylates et méthacrylates d'hydroxyalkyle inférieurs, l'acide acrylique et l'acide méthacrylique, l'anhydride maléique et les maléimides substitués par des groupes alkyle ou aryle. En particulier, on peut mentionner le méthacrylate de méthyle, le méthacrylate d'éthyle, le méthacrylate d'isopropyle, le méthacrylate de n-butyle, le méthacrylate de sec.-butyle, le méthacrylate de tert.-butyle, le styrène, l'α-méthylstyrène, le monochlorostyrène, le tertiobutylstyrène, le vinyltoluène, etc.

Le schéma réactionnel général de cette polymérisation radicalaire est le suivant :

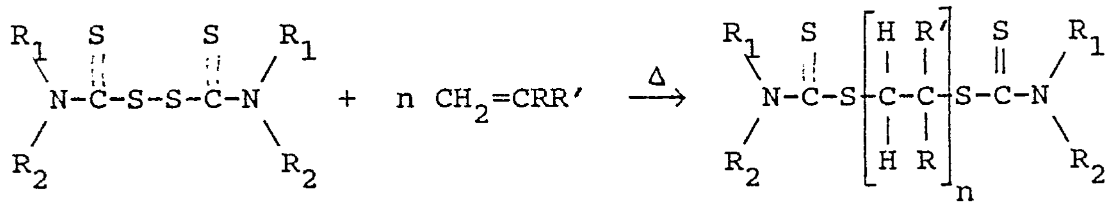

La quantité d'iniferter introduite est généralement comprise entre $0,1 \times 10^{-3}$ mole/l et 0,5 mole/l par rapport au monomère vinylique. Lorsque l'iniferter est incorporé en trop grande quantité, la vitesse de polymérisation décroît, surtout dans le cas des acrylates, car il joue alors principalement le rôle d'un agent de terminaison des radicaux primaires.

La stabilité des liaisons

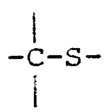

du polymère ou de l'oligomère obtenu a été contrôlée. Etant donné que l'iniferter porte des groupements phosphorés, l'oligomère ou le polymère α,ω-difonctionnel résultant présente alors un caractère d'ignifugeant conduisant à des matériaux ignifugés, s'il est mis en oeuvre aussi bien par lui-même, qu'en mélange ou en combinaison avec d'autres matières polymères.

L'invention porte également sur les oligomères et polymères vinyliques α,ω-bifonctionnels obtenus tels que définis ci-dessus ; sur l'utilisation de ces oligomères et polymères pour fabriquer des polymères séquencés, par condensation de leurs fonctions terminales en présence d'au moins un autre oligomère ou polymère fonctionnel, et enfin sur l'utilisation dans la fabrication de matières ignifugées, comme polymères ignifugeants, des oligomères et polymères vinyliques tels que définis ci-dessus, en tant que tels, comme additifs d'ignifugation, ou à l'état condensé avec au moins un autre oligomère ou polymère fonctionnel.

Il a été vérifié que les propriétés mécaniques et physiques des matières ignifugées résultantes ne sont pas sensiblement affectées par la présence des groupements ignifugeants, et que ces matières ignifugées présentent une valeur de l'indice limite d'oxygène (tel que mesuré selon la norme ASTMD 2863-70) tout à fait acceptable.

Pour mieux illustrer l'objet de la présente invention, on en décrira ci-après plusieurs exemples de réalisation, qui sont donnés à titre indicatif et non limitatif.

EXEMPLE 1 :

**Synthèse du disulfure de thiurame de N,N′-diméthyl N,N′-bis[2-(diéthyl, N-méthylphosphorylamido)éthyl]**

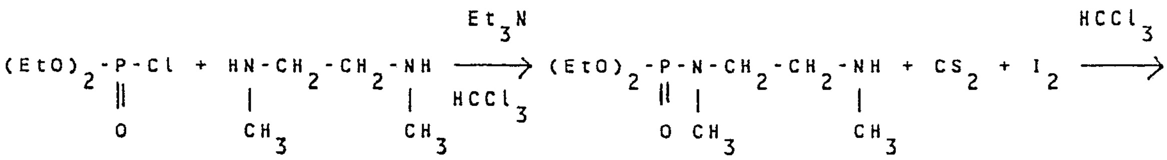


(A)

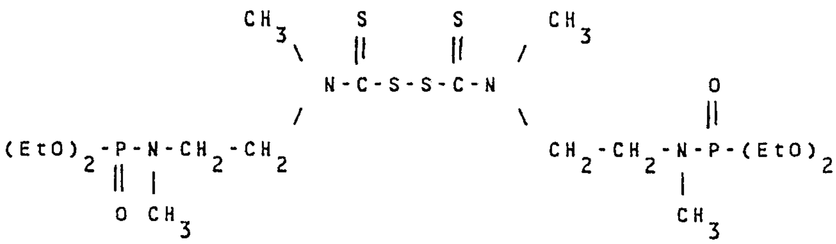

DTDP

Synthèse de l'amine (A) :

40 ml de diméthyl éthylène diamine (49,7 g ; 0,56 mole) sont dissous dans 150 ml de chloroforme contenant 40 ml de triéthylamine. 40 ml de diéthyl chlorophosphate (47,8 g ; 0,28 mole) en solution dans 125 ml de chloroforme sont additionnés goutte à goutte à température ambiante pendant 2 heures. Le mélange réactionnel est maintenu sous agitation après la fin de l'addition pendant 12 heures.

La solution est alors lavée avec une solution aqueuse sodée (150 ml d'$H_2O$ contenant 15 g de NaOH) puis avec de l'eau distillée (100 ml). Le mélange est séché sur $Na_2SO_4$. Le solvant ($HCCl_3$) est ensuite évaporé sous pression réduite, le résidu est distillé sous vide. La fraction recueillie à 105° C/mm de Hg correspond au DTDP (rendement 42%).

Caractéristiques :

1) liquide incolore
2) densité : 1,05 g/ml
3) NH % : 6,7 %

Thiocarbamylation

20 g de l'amine (A) (soit 0,09 mole) sont dissous dans 100 ml de $HCCl_3$ contenant 12,5 ml de triéthylamine. 6,85 g (0,09 mole) de $CS_2$ sont ensuite additionnés ainsi que 11,5 g d'iode. Le mélange est agité jusqu'à consommation totale de l'iode (changement de couleur). La solution est alors lavée avec 100 ml d'$H_2O$ distillée 3 fois de suite, puis séchée sur $Na_2SO_4$ pendant 48 heures. La solvant est évaporé sous pression réduite à température ambiante tout en le maintenant dans l'obscurité. Une résine brune est obtenue et précipitée dans de l'éther de pétrole (toujours dans l'obscurité). (Rendement : 23 g, 85,6 %).

Caractérisation

Analyse élémentaire (en %)

| C | H | N | O | P | S |
|---|---|---|---|---|---|
| 36,0 | 6,8 | 9,2 | 16,1 | 10,5 | 20,4 |

RMN $^{31}P$ ($CCl_4$) δppm
1,3 (triplet, 6H, $CH_3$-C-O)
2,7 (doublet, 3H, P-N-$CH_3$)
3,3 (3H, P-N-$CH_2$)

3,6 (singulet, 3H, $\underset{S}{\underset{\|}{C}}$-N-$CH_3$)

4,0 (multiplet, 6H, O-$CH_2$ + $\underset{S}{\underset{\|}{C}}$-N-$CH_2$)

EXEMPLES 2 à 9 :

**Polymérisation radicalaire du méthacrylate de méthyle et du styrène avec le composé de l'Exemple 1 comme iniferter.**

On a effectué des polymérisations de méthacrylate de méthyle (Exemples 2 à 4) et de styrène (Exemples 5 à 9), selon le mode opératoire général ci-après, en fixant la température de polymérisation à 90° C dans le cas des Exemples 2 à 4 et à 70° C dans le cas des Exemples 5 à 9, et en faisant varier la concentration initiale en iniferter et le temps de polymérisation.

Mode Opératoire Général :

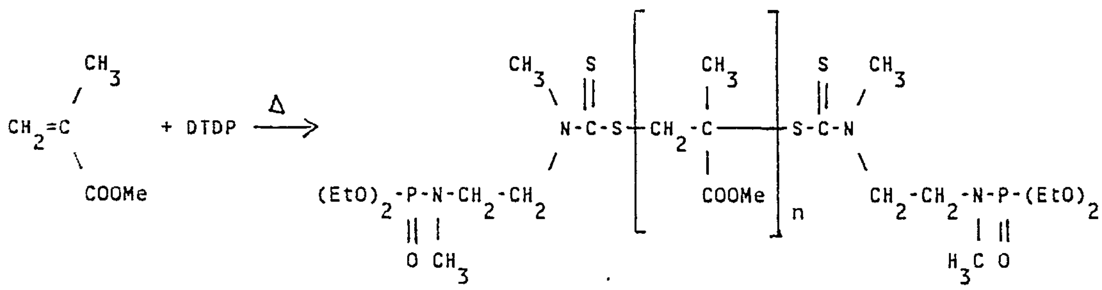

Dans le cas du styrène, on obtient le polymère

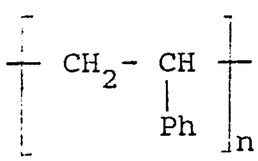

coiffé aux deux extrémités par les mêmes terminaisons que le poly(méthacrylate de méthyle ci-dessus).

On effectue la polymérisation, à l'abri de la lumière, dans des tubes sous vide scellés de 140 x 220 mm, plongés dans un bain d'huile se trouvant à une température fixée. Au bout du temps indiqué, les tubes sont retirés, réfrigérés dans un mélange glace sèche - isopropanol et le polymère est précipité dans le méthanol. Le précipité est recueilli dans un creuset de verre fritté, séché à 45° C pendant toute une nuit et pesé.

On a effectué des polymérisations de méthacrylate de méthyle avec une concentration initiale en iniferter de 0,06 mole/litre, en faisant varier la température et le temps de polymérisation. On a calculé dans chaque cas la masse moléculaire moyenne en nombre du polymère obtenu.

Les résultats figurent au Tableau I ci-après :

Tableau I

| Polymère de l'Exemple | Concentration initiale en DPTD (mole/l) | Temps de polymérisation (minutes) | Masse moléculaire moyenne en nombre Mn |
|---|---|---|---|
| 2 | 0,06 | 170 | 25 000 |
| 3 | 0,13 | 900 | 17 200 |
| 4 | 0,25 | 900 | 10 000 |
| 5 | 0,02 | 220 | 28 100 |
| 6 | 0,03 | 220 | 22 100 |
| 7 | 0,16 | 1200 | 6 700 |
| 8 | 0,25 | 1200 | 4 700 |
| 9 | 0,30 | 1200 | 4 200 |

EXEMPLES COMPARATIFS 1 à 6

Des copolymères du diéthyl 2-(méthacryloyloxy)-éthyl phosphate (DMP) avec le méthacrylate de méthyle (MMA) ont été préparés en solution dans le benzène (THF ou DMF) par copolymérisation du MMA avec le DMP en diverses proportions à 60° C, entre 1 et 2 heures, en présence d'asobisisobutyronitrile (AIBN) comme amorçeur, comme décrit dans J. Polym. Sci., Polym. Chem. 26, 1791 (1988).

Les copolymères obtenus ont été récupérés par précipitation dans l'éther diéthylique.

EXEMPLES COMPARATIFS 7 à 12

Des copolymères du 2-acryloyloxy éthyl diéthyl phosphate (ADP) avec le méthacrylate de méthyle (MMA) ont été préparés en masse à la même température et avec le même amorçeur que les copolymères MMA-DMP des Exemples Comparatifs 1 à 6, comme décrit dans Eur. Polym. J. 25, 251(1989).

EXEMPLES COMPARATIFS 13 à 17

Des copolymères de l'ADP avec le styrène ont été préparés comme ceux des Exemples Comparatifs 6 à 12, et comme décrit dans la publication Eur. Polym. J. 25, 251(1989), le styrène remplaçant le MMA dans ce cas.

Pour chacun des polymères obtenus aux Exemples 2 à 9 et aux Exemples Comparatifs 1 à 17, on a mesuré le pourcentage de phosphore et les indices d'oxygène limite (IOL) selon la norme ASTM 2863-70 des polymères de ces Exemples (on mesure le pourcentage d'oxygène/oxygène + azote qui est nécessaire pour que la combustion s'entretienne pendant 3 minutes). Les résultats sont indiqués dans le Tableau II

Tableau II

| | Exemples | F(M)* | P% | IOL |
|---|---|---|---|---|
| Série I (Comp.) | Comp. 1 | 0,10 | 2,7 | 19 |
| | " 2 | 0,25 | 5,3 | 20,5 |
| | " 3 | 0,40 | 7,6 | 23 |
| | " 4 | 0,55 | 8,9 | 24 |
| | " 5 | 0,70 | 10 | 25 |
| | " 6 | 0,80 | 10,6 | 28,5 |
| Série II (Comp.) | Comp. 7 | 0,10 | 1,4 | 22 |
| | " 8 | 0,15 | 2,6 | 24 |
| | " 9 | 0,30 | 3,5 | 25 |
| | " 10 | 0,39 | 4,7 | 28 |
| | " 11 | 0,31[b] | 5,0 | 30 |
| | " 12 | 0,49 | 6,5 | 36 |
| Série III (Comp.) | Comp. 13 | 0,07 | 2,6 | 22 |
| | " 14 | 0,11[a] | 4,0 | 23 |
| | " 15 | 0,21 | 5,2 | 23,5 |
| | " 16 | 0,30 | 6,5 | 25 |
| | " 17 | 0,48 | 7,7 | 27 |
| Série IV (Inv.) | Ex. 2 | | 0,35 | 22,5 |
| | " 3 | | 0,6 | 24 |
| | " 4 | | 1,05 | 26,5 |
| Série V (Inv.) | Ex. 5 | | 0,22 | 22 |
| | " 6 | | 0,47 | 26 |
| | " 7 | | 0,93 | 29 |
| | " 8 | | 1,33 | 29 |
| | " 9 | | 1,48 | 32 |

* Fraction molaire du comonomère dans le mélange MMA-comonomère ou styrène-comonomère.
a = réaction réalisée à 45° C ;
b = réaction réalisée à 90° C.

On a ensuite calculé le rapport ΔIOL/P, ΔIOL étant le IOL du polymère phosphoné diminué du IOL de la chaîne principale, à savoir 17,5 pour le PMMA et 20 pour le polystyrène.

Les courbes des valeurs des ΔIOL pour tous les types de polymères en fonction de leur teneur en phosphore ont été tracées en appliquant la méthode des plus petits carrés pour une équation de premier ordre. La pente des courbes donne l'efficacité apparente de l'ignifugation de la fonction phosphonée particulière sur une échelle comparative. Les coefficients d'efficacité ainsi déterminés sont rapportés dans le Tableau III.

Tableau III

| Type de polymère | I | II | III | IV | V |
|---|---|---|---|---|---|
| Coefficient d'efficacité | 0,85 | 2,66 | 0,96 | 5,81 | 7,30 |

Lorsque la chaîne principale est du PMMA, les polymères de l'invention ont une tenue au feu de 2,2 à 6,8 fois supérieure à celle des polymères des Exemples Comparatifs, les copolymères MMA-DMP ayant un rapport ΔIOL/P 6,8 fois moins important que le PMMA $\alpha,\omega$ difonctionnels selon l'invention, et les copolymères MMA-ADP ont un rapport ΔIOL/P 2,2 fois moins important que les mêmes polymères de l'invention.

Lorsque la chaîne principale est du polystyrène, les polymères de l'invention ont un rapport ΔIOL/P 7,6 fois supérieur à celui des copolymères styrène-ADP.

**Revendications**

1 - Composé chimique représenté par la formule (I) :

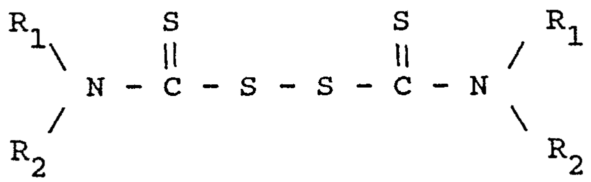

(I)

dans laquelle :

- $R_1$ et $R_2$ représentent chacun, indépendamment l'un de l'autre :

. un groupe alkyle en $C_1$-$C_{12}$, linéaire ou ramifié, éventuellement interrompu par au moins un hétéroatome et/ou par au moins un reste

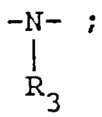

. un groupe cycloalkyle en $C_3$-$C_{12}$ ;

. un groupe aryle ;

. un groupe -Y-$R_4$, dans lequel :

- Y représente une simple liaison; un hétéroatome ; un groupe alkyle en $C_1$-$C_{12}$, linéaire ou ramifié, éventuellement interrompu par un hétéroatome et/ou par au moins un reste

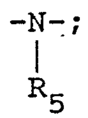

un groupe cycloalkyle en $C_3$-$C_{12}$, un groupe aryle ; et

- $R_4$ représente un groupement phosphoré ;

- $R_3$ et $R_5$ étant choisis indépendamment parmi les groupes entrant dans la définition de $R_1$ et $R_2$, à l'exclusion du groupe Y-$R_4$ ;

- chacun des radicaux $R_1$, $R_2$, $R_3$ et $R_5$ pouvant porter au moins un groupement phosphoré,

à la condition qu'au moins l'un parmi les radicaux $R_1$ et $R_2$ soit constitué par ou soit porteur d'au moins un groupement phosphoré, ce groupement pouvant être porté par un radical $R_3$ ou $R_5$.

2 - Composé selon la revendication 1, caractérisé par le fait que les groupes alkyle, cycloalkyle et phényle entrant dans la définition de $R_1$ et $R_2$ sont respectivement un groupe alkyle en $C_1$-$C_6$, un groupe cycloalkyle en $C_5$-$C_7$, et un groupe phényle ou naphtyle.

3 - Composé selon la revendication 1, caractérisé par le fait que $R_1$ (ou $R_2$) représente le groupement comportant la fonction phosphinoyle ou thiophosphinoyle :

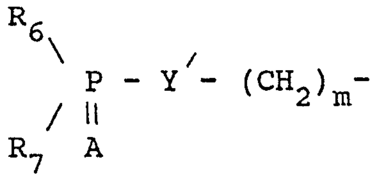

dans lequel :

- $R_6$ et $R_7$, identiques ou différents, représentent chacun un groupe alkyle, alcoxy, aryle, aryloxy,

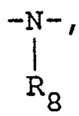, $R_8$

$R_8$ étant choisi parmi les groupes entrant dans la définition de $R_1$ et $R_2$, les groupes $R_6$, $R_7$ et $R_8$ pouvant être substitués chacun par au moins un atome d'halogène ;

A représente un atome d'oxygène ou de soufre ;

- Y′ représente une simple liaison, ou -O-, ou encore

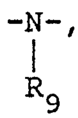,

$R_9$ étant choisi parmi les groupes entrant dans la définition de $R_1$ et $R_2$ ; et

- m va de 0 à 12.

4 - Procédé de fabrication du composé de formule (I) tel que défini à l'une des revendications 1 à 3, caractérise par le fait que l'on fait réagir un composé de formule (II) :

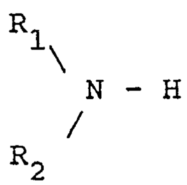

(II)

avec le disulfure de carbone en présence d'au moins un agent oxydant.

5 - Procédé selon la revendication 4, caractérisé par le fait que le rapport molaire du composé (II) à $CS_2$ est sensiblement de 2 : 1.

6 - Procédé selon la revendication 4, caracterisé par le fait que le rapport molaire du composé (II) à $CS_2$ est sensiblement de 1 : 1, la réaction étant effectuée en présence d'une amine tertaire, à raison d'environ 1 mole par mole de composé (II) ou de $CS_2$.

7 - Utilisation du composé tel que défini à l'une des revendications 1 à 6, comme agent ayant la triple fonction d'initiateur, d'agent de transfert de chaîne et d'agent de terminaison dans la polymérisation radicalaire de monomères vinyliques.

8 - Oligomères et polymères vinyliques α,ω-bifonctionnels obtenus par polymérisation radicalaire d'au moins un monomère vinylique en présence d'au moins un composé tel que défini à l'une des revendications 1 à 3.

9 - Utilisation des oligomères et polymères vinyliques α,ω-bifonctionnels tels que définis à la revendication 10, pour fabriquer des polymères séquencés, par condensation de leurs fonctions terminales en présence d'au moins un autre oligomère ou polymère fonctionnel.

10 - Utilisation, dans la fabrication de matières ignifugées, comme polymères ignifugeants, des oligomères et polymères vinyliques α,ω-bifonctionnels, tels que définis à la revendication 8, en tant que tels, comme additifs, ou à l'état condensé avec au moins un autre oligomère ou polymère fonctionnel.

Office européen des brevets

# RAPPORT DE RECHERCHE EUROPEENNE

Numero de la demande

EP 89 40 1078

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| D,Y | EP-A-0 237 792 (AKZO N.V.)<br>* Revendications *<br>--- | 1-10 | C 07 F 9/24<br>C 08 F 2/38 |
| Y | US-A-2 784 223 (M. SCALERA et al.)<br>* En entier *<br>----- | 1-6 | |
| | | | **DOMAINES TECHNIQUES RECHERCHES (Int. Cl.4)** |
| | | | C 07 F 9/00<br>C 08 F 2/00 |

Le présent rapport a été établi pour toutes les revendications

| Lieu de la recherche | Date d'achèvement de la recherche | Examinateur |
|---|---|---|
| LA HAYE | 30-06-1989 | BESLIER L.M. |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)